# DEMANDE DE BREVET EUROPEEN

(11) **EP 4 789 912 A1**
(43) Date de publication de la demande: **12.08.2026**
(21) Numéro de dépôt: 26156724.2
(22) Date de dépôt: 05.02.2026
(51) Int. Cl.: B60N 2/806, B60N 2/821, B60N 2/888

(54) **APPUI-TÊTE DE SIÈGE DE VÉHICULE AUTOMOBILE**

(30) Priorité: 07.02.2025 FR 2501276; 07.03.2025 FR 2502319
(71) Demandeur: Tesca Seat Components Services, 92800 Puteaux (FR)
(72) Inventeur: GEORGES, Laurent, 92800 Puteaux (FR); LEFEVRE, Steve, 92800 Puteaux (FR)
(74) Mandataire: Sayettat, Julien Christian

(57) **Abrégé**

L'invention concerne un appui-tête (1) de siège de véhicule automobile, comprenant un écrou métallique (4b) pourvu d'un filetage d'écrou métallique (6), une vis sans fin (8b) métallique présentant un filetage de vis (9) reçu par ledit filetage d'écrou métallique, un écrou en matériau plastique (12) solidaire de façon co-axiale audit écrou métallique en présentant un filetage d'écrou en matériau plastique (24), ledit filetage de vis s'introduit de façon ajustée dans ledit filetage d'écrou en matériau plastique, ledit filetage d'écrou métallique est dimensionné de manière à présenter un jeu avec ledit filetage de vis, ledit écrou métallique est positionné par rapport audit écrou en matériau plastique de manière à réaliser ledit jeu, lesdits filetage de vis et filetage d'écrou métallique s'interpénètrent radialement en assurant, outre un blocage de ladite vis par ledit écrou en matériau plastique, un blocage additionnel de ladite vis par ledit écrou métallique en cas de choc entrainant une ruine dudit filetage d'écrou en matériau plastique.

## Description

L'invention concerne un appui-tête de siège de véhicule automobile.

Il est connu de réaliser un appui-tête de siège de véhicule automobile, ledit appui-tête comprenant :
- une armature métallique de montage sur un dossier dudit siège,
- un corps monté mobile en coulissement par rapport à ladite armature, de manière à pouvoir être réglé par rapport à ladite armature,
- un écrou métallique monté sur ledit corps - respectivement ou sur un élément extérieur audit corps -, ledit écrou étant pourvu d'un filetage d'écrou métallique,
- un motoréducteur solidaire dudit élément extérieur - respectivement ou dudit corps -, ledit motoréducteur actionnant en rotation une vis sans fin métallique présentant un filetage de vis reçu par ledit filetage d'écrou métallique .

Avec un tel agencement, il est connu d'assurer le réglage du corps par la mise en rotation de la vis sans fin dont le filetage coopère de façon ajustée avec le filetage d'écrou métallique.

L'utilisation d'un écrou métallique permet un blocage robuste de la vis sans fin par ledit écrou en cas de choc violent d'une tête de passager sur l'appui-tête, ce qui assure la sécurité d'un occupant du siège pourvu dudit appui-tête.

Cependant, le contact entre l'écrou métallique et la vis sans fin métallique est source de bruit lors du réglage du corps, et également en situation de roulage du véhicule en raison des vibrations se propageant au niveau de ladite vis.

En outre, l'utilisation d'un tel écrou métallique ne permet pas une absorption d'énergie en cas de choc de la tête d'un passager sur l'appui-tête, ledit écrou ne présentant pas une aptitude à se ruiner lors dudit choc ; il en résulte une dangerosité pour un passager dont la tête heurte violemment l'appui-tête, l'énergie déployée étant reçue de façon accentuée par ladite tête, avec les blessures qui peuvent en résulter.

L'invention a pour but de proposer un agencement permettant de résoudre ces problèmes.

A cet effet, l'invention propose un appui-tête de siège de véhicule automobile, ledit appui-tête comprenant :
- une armature métallique de montage sur un dossier dudit siège,
- un corps monté mobile en coulissement par rapport à ladite armature, de manière à pouvoir être réglé par rapport à ladite armature,
- un écrou métallique monté sur ledit corps - respectivement ou sur un élément extérieur audit corps -, ledit écrou étant pourvu d'un filetage d'écrou métallique,
- un motoréducteur solidaire dudit élément extérieur - respectivement ou dudit corps -, ledit motoréducteur actionnant en rotation une vis sans fin métallique présentant un filetage de vis reçu par ledit filetage d'écrou métallique,
ledit appui-tête présentant en outre les caractéristiques suivantes :
- il comprend en outre un écrou en matériau plastique solidaire dudit écrou métallique et disposé de façon co-axiale avec ledit écrou métallique, ledit écrou en matériau plastique présentant un filetage d'écrou en matériau plastique,
- ledit filetage de vis s'introduit de façon ajustée dans ledit filetage d'écrou en matériau plastique afin de permettre un réglage motorisé dudit corps par mise en rotation de ladite vis,
- ledit filetage d'écrou métallique est dimensionné de manière à présenter un jeu avec ledit filetage de vis, afin d'éviter tout contact entre les deux,
- ledit écrou métallique est positionné par rapport audit écrou en matériau plastique de manière à réaliser ledit jeu,
- lesdits filetage de vis et filetage d'écrou métallique s'interpénètrent radialement de manière à pouvoir assurer, outre un blocage de ladite vis assuré par ledit écrou en matériau plastique, un blocage additionnel de ladite vis par ledit écrou métallique en cas de choc d'une tête de passager sur ledit appui-tête entrainant une ruine dudit filetage d'écrou en matériau plastique.

On précise ici que les termes « axial » et « radialement » se réfèrent à l'axe de symétrie selon lequel s'étend la vis sans fin.

On précise en outre que, dans cette description, les termes de positionnement dans l'espace (supérieur, longitudinal, transversal, vertical, ...) sont pris en référence à l'appui-tête disposé dans le véhicule en situation d'utilisation, ledit véhicule s'étendant longitudinalement selon sa longueur (axe X), transversalement selon sa largeur (axe Y) et verticalement selon sa hauteur (axe Z).

Avec l'agencement proposé, l'écart entre le filetage d'écrou métallique et le filetage de vis permet éviter tout contact entre eux, ce qui élimine le bruit en réglage et également en situation de roulage.

En outre, avec un tel agencement, en cas de ruine du filetage en matériau plastique consécutivement à un choc violent sur l'appui-tête, le filetage de vis vient prendre appui sur le filetage d'écrou métallique de manière à reprendre les efforts et à bloquer le corps par rapport à l'armature, ce qui est favorable pour la sécurité d'un occupant du siège.

Par ailleurs, la ruine du filetage en matériau plastique en cas de choc violent permet une absorption d'énergie améliorant la sécurité du passager dont la tête heurte violemment l'appui-tête.

D'autres particularités et avantages de l'invention apparaîtront dans la description qui suit, faite en référence aux figures jointes, dans lesquelles :

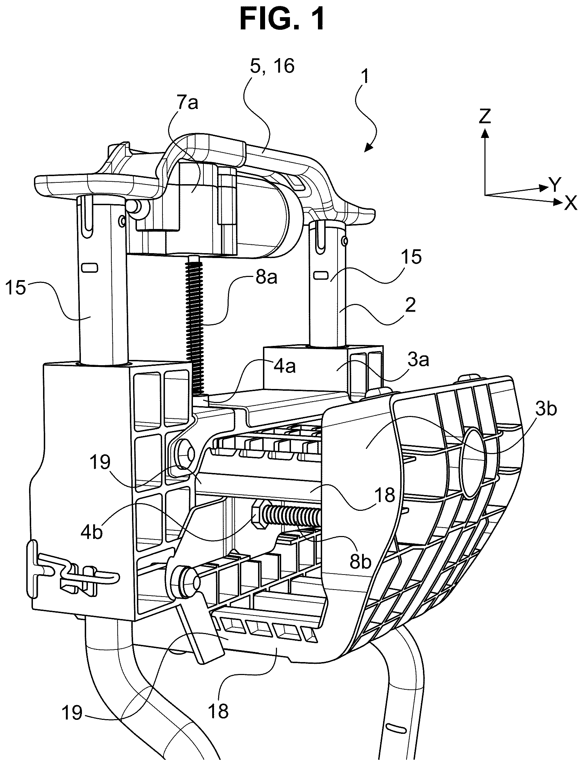

[Fig.1] est une vue schématique en perspective partielle d'un appui-tête selon une réalisation,

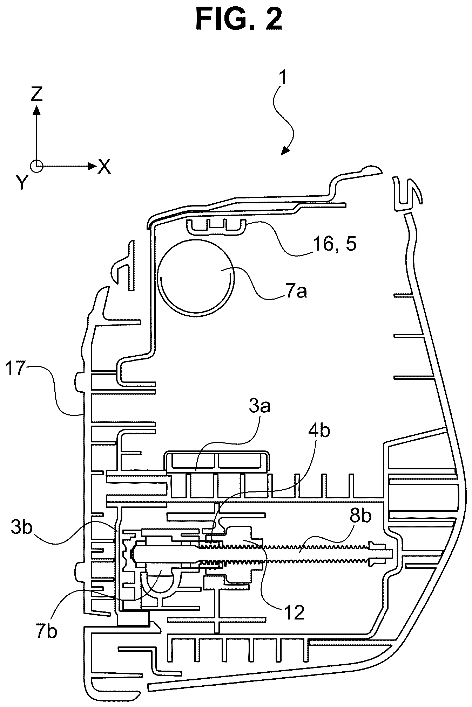

[Fig.2] est une vue schématique en coupe longitudinale verticale de l'appui-tête représenté en figure 1,

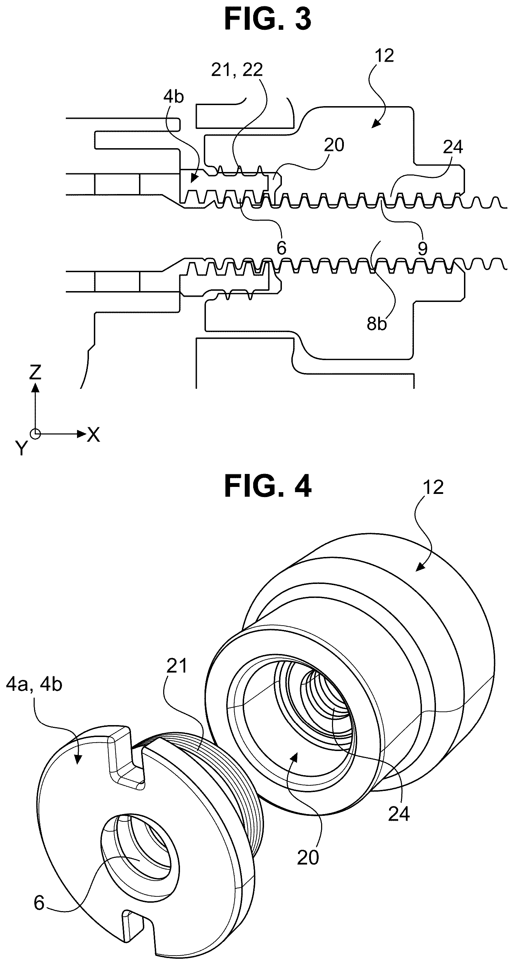

[Fig.3] est un agrandissement de détail de la figure 2,
[Fig.4] est une vue schématique en perspective éclatée, selon un mode de réalisation, d'un écrou en matériau plastique et d'un écrou métallique avant leur assemblage, le filetage interne du logement de l'écrou en matériau plastique n'étant pas encore réalisé par taraudage.

En référence aux figures, on décrit un appui-tête 1 de siège de véhicule automobile, ledit appui-tête comprenant :
- une armature 2 métallique de montage sur un dossier dudit siège,
- un corps 3a,3b monté mobile en coulissement par rapport à ladite armature, de manière à pouvoir être réglé par rapport à ladite armature,
- un écrou métallique 4a,4b monté sur ledit corps - respectivement ou sur un élément extérieur 5 audit corps -, ledit écrou étant pourvu d'un filetage d'écrou métallique 6,
- un motoréducteur 7a,7b solidaire dudit élément extérieur - respectivement ou dudit corps -, ledit motoréducteur actionnant en rotation une vis sans fin 8a,8b métallique présentant un filetage de vis 9 reçu par ledit filetage d'écrou métallique,
ledit appui-tête présentant en outre les caractéristiques suivantes :
- il comprend en outre un écrou en matériau plastique 12 solidaire dudit écrou métallique et disposé de façon co-axiale avec ledit écrou métallique, ledit écrou en matériau plastique présentant un filetage d'écrou en matériau plastique 24,
- ledit filetage de vis s'introduit de façon ajustée dans ledit filetage d'écrou en matériau plastique afin de permettre un réglage motorisé dudit corps par mise en rotation de ladite vis,
- ledit filetage d'écrou métallique est dimensionné de manière à présenter un jeu avec ledit filetage de vis, afin d'éviter tout contact entre les deux,
- ledit écrou métallique est positionné par rapport audit écrou en matériau plastique de manière à réaliser ledit jeu,
- lesdits filetage de vis et filetage d'écrou métallique s'interpénètrent radialement de manière à pouvoir assurer, outre un blocage de ladite vis assuré par ledit écrou en matériau plastique, un blocage additionnel de ladite vis par ledit écrou métallique en cas de choc d'une tête de passager sur ledit appui-tête entrainant une ruine dudit filetage d'écrou en matériau plastique.

Selon la réalisation représentée, l'écrou métallique 4a,4b est disposé dans un logement 20 prévu en extrémité de l'écrou en matériau plastique 12.

Selon la réalisation représentée :
- l'écrou métallique 4a,4b est pourvu d'un filetage externe 21,
- le logement 20 est pourvu d'un filetage interne 22 obtenu par taraudage, ledit filetage interne recevant ledit filetage externe de manière à permettre, suite à un montage par rotation dudit écrou métallique, un positionnement axial et angulaire dudit écrou métallique en position nominale par rapport audit écrou en matériau plastique 12, afin d'assurer le jeu attendu entre le filetage d'écrou métallique 6 et le filetage de vis 9.

Le taraudage effectué permet une fixation très robuste de l'écrou métallique 4a,4b sur l'écrou en matériau plastique 12, et donc son blocage très efficient dans sa position nominale.

Selon la réalisation représentée :
- l'armature 2 comprend deux tiges 15 métalliques parallèles - notamment tubulaires - s'étendant verticalement, lesdites tiges présentant deux extrémités supérieures reliées entre elles par une entretoise 16 transversale - soit rapportée, soit issue de matière desdites tiges -,
- le corps est sous forme d'un premier corps 3a monté en coulissement vertical sur ladite armature, de manière à pouvoir être réglé en hauteur,
- un premier motoréducteur 7a est fixé sur ladite entretoise formant l'élément extérieur 5 - respectivement ou sur ledit premier corps selon une réalisation non représentée -, ledit premier motoréducteur actionnant en rotation une première vis sans fin 8a reçue par un premier écrou métallique 4a fixé audit premier corps - respectivement ou à ladite entretoise selon une réalisation non représentée.

Selon la réalisation représentée :
- l'appui-tête 1 comprend en outre un deuxième corps 3b monté en coulissement longitudinal sur le premier corps 3a - qui pourrait être relié à l'armature 2 de manière fixe selon une variante non représentée -, de manière à pouvoir être réglé selon une direction longitudinale, ledit deuxième corps étant solidaire d'une paroi d'appui 17 de la tête d'un passager,
- un deuxième motoréducteur 7b est fixé audit deuxième corps, ledit deuxième motoréducteur actionnant en rotation une deuxième vis sans fin 8b reçue par un deuxième écrou métallique 4b fixé audit premier corps.

Selon la réalisation représentée :
- le premier corps 3a est pourvu de parties femelles 18 s'étendant longitudinalement,
- le deuxième corps 3b est pourvu de parties mâles 19 s'étendant longitudinalement et coopérant chacune avec une partie femelle 18 respective,
de manière à permettre le coulissement dudit deuxième corps par rapport audit premier corps.

## Revendications

1. Appui-tête (1) de siège de véhicule automobile, ledit appui-tête comprenant :
• une armature (2) métallique de montage sur un dossier dudit siège,
• un corps (3a,3b) monté mobile en coulissement par rapport à ladite armature, de manière à pouvoir être réglé par rapport à ladite armature,
• un écrou métallique (4a,4b) monté sur ledit corps - respectivement ou sur un élément extérieur (5) audit corps -, ledit écrou étant pourvu d'un filetage d'écrou métallique (6),
• un motoréducteur (7a,7b) solidaire dudit élément extérieur - respectivement ou dudit corps -, ledit motoréducteur actionnant en rotation une vis sans fin (8a,8b) métallique présentant un filetage de vis (9) reçu par ledit filetage d'écrou métallique,
ledit appui-tête étant **caractérisé en ce que** :
• il comprend en outre un écrou en matériau plastique (12) solidaire dudit écrou métallique et disposé de façon co-axiale avec ledit écrou métallique, ledit écrou en matériau plastique présentant un filetage d'écrou en matériau plastique (24),
• ledit filetage de vis s'introduit de façon ajustée dans ledit filetage d'écrou en matériau plastique afin de permettre un réglage motorisé dudit corps par mise en rotation de ladite vis,
• ledit filetage d'écrou métallique est dimensionné de manière à présenter un jeu avec ledit filetage de vis, afin d'éviter tout contact entre les deux,
• ledit écrou métallique est positionné par rapport audit écrou en matériau plastique de manière à réaliser ledit jeu,
• lesdits filetage de vis et filetage d'écrou métallique s'interpénètrent radialement de manière à pouvoir assurer, outre un blocage de ladite vis assuré par ledit écrou en matériau plastique, un blocage additionnel de ladite vis par ledit écrou métallique en cas de choc d'une tête de passager sur ledit appui-tête entrainant une ruine dudit filetage d'écrou en matériau plastique.

2. Appui-tête (1) selon la revendication 1, **caractérisé en ce que** l'écrou métallique (4a,4b) est disposé dans un logement (20) prévu en extrémité de l'écrou en matériau plastique (12).

3. Appui-tête (1) selon la revendication 2, **caractérisé en ce que** :
• l'écrou métallique (4a,4b) est pourvu d'un filetage externe (21),
• le logement (20) est pourvu d'un filetage interne (22) obtenu par taraudage, ledit filetage interne recevant ledit filetage externe de manière à permettre, suite à un montage par rotation dudit écrou métallique, un positionnement axial et angulaire dudit écrou métallique en position nominale par rapport audit écrou en matériau plastique (12), afin d'assurer le jeu attendu entre le filetage d'écrou métallique (6) et le filetage de vis (9).

4. Appui-tête (1) selon l'une quelconque des revendications précédentes, **caractérisé en ce que** :
• l'armature (2) comprend deux tiges (15) métalliques parallèles s'étendant verticalement, lesdites tiges présentant deux extrémités supérieures reliées entre elles par une entretoise (16) transversale,
• le corps est sous forme d'un premier corps (3a) monté en coulissement vertical sur ladite armature, de manière à pouvoir être réglé en hauteur,
• un premier motoréducteur (7a) est fixé sur ladite entretoise formant l'élément extérieur (5) - respectivement ou sur ledit premier corps -, ledit premier motoréducteur actionnant en rotation une première vis sans fin (8a) reçue par un premier écrou métallique (4a) fixé audit premier corps - respectivement ou à ladite entretoise.

5. Appui-tête (1) selon la revendication précédente, **caractérisé en ce que** :
• il comprend en outre un deuxième corps (3b) monté en coulissement longitudinal sur le premier corps (3a), de manière à pouvoir être réglé selon une direction longitudinale, ledit deuxième corps étant solidaire d'une paroi d'appui (17) de la tête d'un passager,
• un deuxième motoréducteur (7b) est fixé audit deuxième corps, ledit deuxième motoréducteur actionnant en rotation une deuxième vis sans fin (8b) reçue par un deuxième écrou métallique (4b) fixé audit premier corps.

6. Appui-tête (1) selon la revendication précédente, **caractérisé en ce que** :
• le premier corps (3a) est pourvu de parties femelles (18) s'étendant longitudinalement,
• le deuxième corps (3b) est pourvu de parties mâles (19) s'étendant longitudinalement et coopérant chacune avec une partie femelle (18) respective,
de manière à permettre le coulissement dudit deuxième corps par rapport audit premier corps.
